(19) Europäisches Patentamt
European Patent Office
Office européen des brevets

(11) Veröffentlichungsnummer: **0 433 784 A2**

# (12) EUROPÄISCHE PATENTANMELDUNG

(21) Anmeldenummer: **90123427.8**

(22) Anmeldetag: **06.12.90**

(51) Int. Cl.5: **C09J 5/02**, C09B 47/16

(30) Priorität: **16.12.89 DE 3941577**

(43) Veröffentlichungstag der Anmeldung: **26.06.91 Patentblatt 91/26**

(84) Benannte Vertragsstaaten: **BE CH DE FR GB IT LI NL**

(71) Anmelder: **BASF Aktiengesellschaft**
**Carl-Bosch-Strasse 38**
**W-6700 Ludwigshafen(DE)**

(72) Erfinder: **Dittrich, Uwe, Dr.**
**Pfalzgrafenstrasse 21**
**W-6700 Ludwigshafen(DE)**
Erfinder: **Kranz, Joachim, Dr.**
**Rheinrugenstrasse 22**
**W-6700 Ludwigshafen(DE)**

## (54) Verwendung metallfreier Phthalocyaninderivate als Haftvermittler für strukturelle Klebeverbingungen.

(57) Verwendung metallfreier Phthalocyaninderivate der allgemeinen Formel I

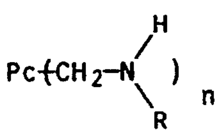

I

worin

Pc metallfreies Phthalocyanin bedeutet,

R für ein Wasserstoffatom, eine $C_1$- bis $C_8$-Alkyl- oder eine $C_5$- bis $C_8$-Cycloalkylgruppe steht

und

n eine der Zahlen 1 bis 8 bedeutet,

als Haftvermittler für Klebeverbindungen.

EP 0 433 784 A2

# VERWENDUNG METALLFREIER PHTHALOCYANINDERIVATE ALS HAFTVERMITTLER FÜR STRUKTURELLE KLEBEVERBINDUNGEN

Die vorliegende Erfindung betrifft die Verwendung metallfreier Phthalocyaninderivate der allgemeinen Formel I

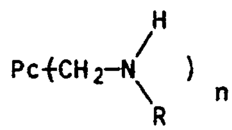

I

worin

Pc metallfreies Phthalocyanin bedeutet,

R für ein Wasserstoffatom, eine $C_1$- bis $C_8$-Alkyl- oder eine $C_5$- bis $C_8$-Cycloalkylgruppe steht

und

n eine der Zahlen 1 bis 8 bedeutet,

als Haftvermittler für Klebeverbindungen.

Unter Haftvermittlern werden Stoffe verstanden, die auf die Oberflächen der zu verklebenden Teile aufgebracht werden. Sie benetzen die Fügeteile vollständig und erbringen dadurch einen Schutz vor Verunreinigungen und Feuchtigkeit vor der Verklebung und verbessern die Festigkeit der Klebeverbindung.

Gängige Haftvermittler wie Silan-Derivate sind z. B. in Treatise on Adhesion and Adhesives, Volume 6, 255ff beschrieben. Diese Verbindungen sollen die Ausbildung kovalenter Bindungen zwischen Substrat und Klebstoff ermöglichen, steigern aber nicht in befriedigendem Ausmaß die Festigkeit der Klebeverbindungen.

In dem US-Patent 3 993 631 ist die Verwendung metallhaltiger und metallfreier Polyphthalocyaninharze in Klebstoffen beschrieben. Hier werden sie jedoch zur Verbesserung der Harzeigenschaften und nicht als Haftvermittler eingesetzt.

Die Verwendung metallfreier Phthalocyaninderivate der allgemeinen Formel I lag bisher hauptsächlich auf dem Gebiet der Pigmentzubereitungen für Lacke und Farben, wie beispielsweise aus der DE-PS 1 248 835 zu erkennen ist.

Aufgabe der vorliegenden Erfindung war es, Haftvermittler zu finden, die zusätzlich zur Fähigkeit die Oberfläche des zu verklebenden Gegenstandes zu schützen, die Festigkeit der Klebeverbindungen in befriedigendem Maße erhöhen.

Demgemäß wurde die Verwendung der eingangs definierten metallfreien Phthalocyaninderivate I als Haftvermittler gefunden.

Die als Farbstoffe schon lange bekannten Phthalocyaninderivate wurden nun als Haftvermittler in Klebeverbindungen eingesetzt. Bei strukturellen Verklebungen im Transportwesen und Maschinenbau können sie auf metallischen, insbesondere aluminium- oder eisenhaltigen Gegenständen eingesetzt werden.

Die metallfreien Phthalocyaninderivate I sind an sich bekannt und werden nach bekannten Verfahren hergestellt. So kann z. B. die Herstellung der Aminomethylenphthalocyanine $Pc(CH_2-NH_2)_n$ durch eine Einhorn-Reaktion des Phthalocyanins und anschließende Entacylierung erfolgen. Hierbei wird Phthalimid mit Paraformaldehyd zu N-Methylolphthalimid umgesetzt. Dieses reagiert anschließend mit Phthalocyanin zu Phthalimidomethylenphthalocyanin. Diese Reaktion, ebenso wie die anschließende Entacylierung sind an sich bekannt und beispielsweise in der DE-PS 852 588 beschrieben, so daß sich nähere Erläuterungen erübrigen.

Eine Möglichkeit zur Herstellung von Verbindungen der allgemeinen Formel I, in der R kein Wasserstoffatom darstellt, besteht in der Alkylierung der entsprechenden Aminomethylenverbindungen nach bekannten Verfahren, wie z. B. in der DE-AS 25 16 054 beschrieben. Dabei kann es erforderlich sein, eine Mischung aus den N,N-dialkylierten und den N-alkylierten Verbindungen zu trennen; auch dies geschieht nach den an sich bekannten und üblichen Verfahren.

Von den metallfreien Phthalocyaninderivaten I sind diejenigen Verbindungen bevorzugt, bei denen R ein Wasserstoffatom oder eine $C_1$- bis $C_4$-Alkylgruppe darstellt, besonders bevorzugt sind die Aminomethylenphthalocyanine.

Bei der Herstellung der Verbindungen I ergeben sich im allgemeinen Mischungen, in denen n Werte im Bereich von 1 bis 8, bevorzugt 1 bis 4, insbesondere jedoch 1 annimmt. Derartige Reaktionsprodukte bzw. Mischungen können erfindungsgemäß verwendet werden.

Zur erfindungsgemäßen Verwendung der metallfreien Phthalocyaninderivate I als Haftvermittler wird

vorzugsweise eine gesättigte Lösung von I in polaren Lösungsmitteln hergestellt. Grundsätzlich eignen sich alle polaren Lösungsmittel, in denen I löslich ist; auch Mischungen können eingesetzt werden. Bevorzugt sind Alkohole, Dimethylformamid und Ketone, insbesondere Methylethylketon. Zusätzlich können Harze beispielsweise solche auf Polyurethan-, Epoxid- oder Acrylatbasis, der Lösung zugesetzt werden. Dabei werden Epoxidharze bevorzugt. Diese Harze werden in Mengen von 0,1 bis 30 Gew.-%, bevorzugt 0,2 bis 5 Gew.-%, bezogen auf das Gewicht der Lösung eingesetzt.

Besonders vorteilhaft lassen sich die Verbindungen der Formel I als Haftvermittler bei der Verklebung von Metallen verwenden.

Hierzu werden die vorstehend beschriebenen Mischungen auf entfettete Metallteile, insbesondere Stahl aufgetragen und vorzugsweise an der Luft zum Trocknen belassen. Der Zeitraum der Lufttrocknung liegt dabei im allgemeinen im Bereich von 0,5 bis 120 min, bevorzugt 2 bis 30 min.

Auf die derart erhaltenen Substrate werden dann Klebstoffe aufgebracht. Hierbei eignen sich beispielsweise solche auf Basis von Acrylaten, Polyurethanen oder Epoxiden, wie sie z. B. aus EP-A 232 225, US-A 4 539 253 oder US-A 4 451 615 bekannt sind. Bevorzugt werden solche Klebstoffe verwendet, die auf der gleichen Grundlage basieren wie die Harzzusätze beim Haftvermittler. Daher sind diejenigen Klebstoffe besonders bevorzugt, die als wesentliche Komponente Epoxidharze beinhalten, insbesondere Epoxidharze auf der Basis von Bisphenol A. Weiterhin können z. B. Epoxidharze auf Novolak-Basis, Acrylatkautschuke, Acrylnitril/Butadien-Copolymerisate, aminoterminierte Polyether und Phosphine enthalten sein. Die Harze und Modifizierkomponenten werden zur Herstellung der Klebstoffe im allgemeinen 10 bis 360 min, vorzugsweise 30 bis 120 min bei 20 bis 180°C, bevorzugt bei 80 bis 140°c, falls notwendig unter Stickstoffatmosphäre, gerührt.

Als Härter können die hierfür üblichen Verbindungen wie Carbonsäureanhydride, aliphatische oder aromatische Amine verwendet werden, wie sie aus der Literatur, z. B. DD-A 227 153, EP-A 81 146 oder DE-A 2 910 110 bekannt sind. Unlösliche Amine, z. B. Dicyandiamid, erfordern höhere Temperaturen, zur Härtung bei Raumtemperatur sind starke Basen wie Diethylentriamin und höhere Polyamine geeignet. Bevorzugt werden Mischungen aus Diethylamin und Nonylphenol eingesetzt. Das Gewichtsver hältnis Klebstoff zu Härter kann in weiten Grenzen variieren, da es vom eingesetzten Harz abhängig ist. Üblicherweise liegt es im Bereich von 100 : 1 bis 1 : 1, vorzugsweise wird hier ein Gewichtsverhältnis von 20 : 1 bis 5 : 1 verwendet. Die Härtung erfolgt im allgemeinen bei Temperaturen von 20 bis 180°C, insbesondere von 25°C bis 120°C, innerhalb von bis zu 360 min, bevorzugt innerhalb von 30 bis 120 min.

Die erfindungsgemäß als Haftvermittler verwendeten metallfreien Phthalocyaninderivate zeichnen sich dadurch aus, daß zusätzlich zum Schutz der Oberflächen der zu verklebenden Teile vor Verunreinigungen und Feuchtigkeit die Festigkeit der Klebeverbindungen deutlich verbessert wird.

Beispiele: Verklebung von Stahlteilen

Haftvermittler:

Eine gesättigte Lösung von Pc-$CH_2$-$NH_2$ in Methylethylketon wurde mit 1 Gew.-% Epoxidharz auf der Basis von Bisphenol A, mit einem mittleren Epoxidäquivalentgewicht von 176 - 190 g/eq und einer Funktionalität von ca. 2 (DER 331 der Fa. Dow Chemical) versetzt, auf entfettete Stahlteile aufgestrichen und 30 min bei Raumtemperatur an der Luft getrocknet.

Klebstoffe:

Komponenten:

- A: Epoxidharz auf der Basis von Bisphenol A, mit einem mittleren Epoxidäquivalentgewicht von 176 - 190 g/eq und einer Funktionalität von ca. 2
- B: Epoxidharz auf Novolak-Basis, mit einem mittleren Epoxidäquivalentgewicht von 172 - 179 g/eq und einer Viskosität von 1100 - 1700 m.Pa.s
- C: Acrylatkautschuk, der ein Copolymerisat aus n-Butylacrylat, 10 - 20 Gew.-% Styrol sowie geringe Mengen an Methacrylsäuremethylester enthielt
- D: Carboxyliertes Acrylnitril/Butadien-Copolymerisat, mit einem Gehalt an COOH-Gruppenvon 0,052 Äquivalenten pro 100 g, mit einer Funktionalität von 1,8 und einem Acrylnitrilgehalt von 18 Gew.-%.
- E: Aminoterminierter Polyether auf der Basis von Tetrahydrofuran, mit einem Molgewicht von ca. 5000 und aliphatischen Aminogruppen

F: Triphenylphosphin
Härter: 67 Gew.-% Diethylentriamin und
33 Gew.-% Nonylphenol
Gewichtsverhältnis Klebstoff: Härter = 13,3 : 1

Die entsprechenden Klebstoffe wurden mit dem Härter versetzt, auf die mit dem Haftvermittler vorbehandelten Stahlteile aufgebracht und nach einstündiger Lagerung bei Raumtemperatur bei 80 °C 60 min gehärtet.

Die Messungen der Zugscherfestigkeiten erfolgten nach DIN 53 283

Beispiel 1

Klebstoffzusammensetzung: 59,9 Gew.-% A 20,0 Gew.-% B
10,0 Gew.-% C
10,0 Gew.-% D
0,1 Gew.-% F

Die Mischung wurde 60 min bei 130 °C gerührt.

Beispiel 2

Klebstoffzusammensetzung: 55,9 Gew.-% A 20,0 Gew.-% B
10,0 Gew.-% C
10,0 Gew.-% D
4,0 Gew.-% E
0,1 Gew.-% F

Die Mischung wurde ebenfalls 60 min bei 130 °C gerührt.

Beispiel 3

Klebstoffzusammensetzung: 84,5 Gew.-% A 15,0 Gew.-% E
0,5 Gew.-% F

Die Mischung wurde 4 Stunden bei 120 °C unter Stickstoffatmosphäre gerührt.

Vergleichsbeispiele

Es wurde analog den Beispielen gearbeitet, wobei jedoch als Haftvermittler das entsprechende Kupferphthalocyaninderivat eingesetzt wurde.

Vergleichsbeispiel 2V

Es wurde die Klebstoffzusammensetzung aus Beispiel 2 verwendet.

Vergleichsbeispiel 3V

Die Klebstoffzusammensetzung ist identisch mit der aus Beispiel 3.

| Beispiel | Zugscherfestigkeit [MPa] mit Haftvermittler | ohne Haftvermittler |
|---|---|---|
| 1 | 28,5 (2,2) | 14,8 (2,7) |
| 2 | 27,6 (3,5) | 22,6 (3,7) |
| 2V | 11,1 (4,3) | |
| 3 | 39,9 (2,2) | 33,7 (1,8) |
| 3V | 31,2 (3,0) | |

Die Zahlen in Klammer geben die jeweilige Standardabweichung an.

## Ansprüche

1. Verwendung metallfreier Phthalocyaninderivate der allgemeinen Formel I

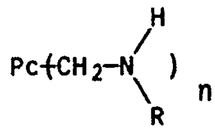

I

worin

Pc metallfreies Phthalocyanin bedeutet,

R für ein Wasserstoffatom, eine $C_1$- bis $C_8$-Alkyl- oder eine $C_5$- bis $C_8$-Cycloalkylgruppe steht

und

n eine der Zahlen 1 bis 8 bedeutet,

als Haftvermittler für Klebeverbindungen.

2. Verwendung metallfreier Phthalocyaninderivate nach Anspruch 1, dadurch gekennzeichnet, daß R ein Wasserstoffatom bedeutet.